(19) Europäisches Patentamt / European Patent Office / Office européen des brevets

(11) **EP 3 977 716 B1**

(12) **EUROPEAN PATENT SPECIFICATION**

(45) Date of publication and mention
of the grant of the patent:
**26.06.2024   Bulletin 2024/26**

(21) Application number: **19726977.2**

(22) Date of filing: **24.05.2019**

(51) International Patent Classification (IPC):
***H04N 1/32*** *(2006.01)*

(52) Cooperative Patent Classification (CPC):
**H04N 1/32256**

(86) International application number:
**PCT/EP2019/063493**

(87) International publication number:
**WO 2020/239189 (03.12.2020 Gazette 2020/49)**

(54) **SECURITY DOCUMENT WITH HALFTONE IMAGES AND METHOD FOR ITS MANUFACTURE**

SICHERHEITSDOKUMENT MIT HALBTONBILDERN UND VERFAHREN ZU SEINER
HERSTELLUNG

DOCUMENT SÉCURISÉ COMPORTANT DES IMAGES EN DEMI-TEINTE ET SON PROCÉDÉ DE
FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.04.2022   Bulletin 2022/14**

(73) Proprietor: **Orell Füssli AG
8036 Zürich (CH)**

(72) Inventor: **CHOSSON, Sylvain
8045 Zürich (CH)**

(74) Representative: **E. Blum & Co. AG
Franklinturm
Hofwiesenstrasse 349
8050 Zürich (CH)**

(56) References cited:
**EP-A1- 3 174 730          WO-A1-2018/191827
US-A1- 2016 321 852**

## Description

Technical Field

The invention relates to a method for manufacturing a security document by printing halftone images on opposite sides of a transparent region of a substrate. It also relates to a security document manufactured or manufacturable by said method.

Background Art

WO 2015/095978 describes a security document having a transparent region with printed images on opposite sides thereof.

The locally averaged transmissions of the printed images are selected such that, when the printed images are superimposed, they generate a visually perceptible image, such as a person's face. In simplified terms, this is achieved by providing a first halftone image corresponding to T1(x, y) and a second halftone image corresponding to T3(x, y). The first halftone image is directly printed onto one side of the document. The pattern for the other side of the document is calculated. The microscopic halftone patterns of the two printed images are not correlated.

US 2016/0321852 also describes a security document having a transparent region with printed patterns, e.g. a portrait and writing, on opposite sides thereof. The patterns are advantageously in register with each other. In transmission, however, the Demichel equation still applies, i.e. the overall transmission coefficient is given by the product of the transmission coefficients of the two patterns, i.e. even though the patterns themselves may be in register, their halftone cells are assumed to be random with respect to each other or not in register.

Disclosure of the Invention

The problem to be solved by the present invention is to provide a security document and method of this type that exhibit improved robustness against counterfeiting.

This problem is solved by the method and security document of the independent claims.

Similar to WO 2015/095978, the invention starts from first and second analog halftone images. A first binary halftone image B1(x, y) is calculated using a first digital halftoning algorithm. It represents the first analog halftone image.

Further, an in contrast to WO 2015/095978, the method uses a second digital halftoning algorithm to calculate a second binary halftone image B2(x, y) representing the second analog halftone image. In WO 2015/095978, no binary halftone image was calculated for the second analog halftone image.

B1(x, y) and B2(x, y) are two binary halftone images (i.e. the numerical representation of two halftone images) representing the two original analog halftone images.

The first binary halftone image B1(x, y) is used for applying a front-side printed image to the front side of the document.

A back-side printed image is applied in register (i.e. with corresponding coordinates x, y) to the backside of the document. In contrast to WO 2015/095978, the inked/non-inked areas of the back-side printed image are, at a microscopic level, correlated with those of the front-side printed image, i.e. the printable dots of the front-side printed image and the back-side printed image are at the same location x, y within the plane of the document.

The back-side printed image is derived from a third binary halftone image B3(x, y). The third binary halftone image B3(x, y) is calculated such that B1, B2, and B3 fulfill the binary condition

$$B1(x, y) \text{ OR } B3(x, y) = B2(x, y). \qquad (1)$$

When viewing the final document from the first side in optical reflection, the front-side printed image can be seen, i.e. the first analog halftone image.

When viewing the document in transmission, the two printed images are superimposed. Light is substantially blocked where at least one of them is inked, microscopically, i.e. the visible pattern will substantially correspond to B1(x, y) OR B3(x, y), i.e. (according to Eq. (1)) to the second halftone image B2(x, y), which corresponds, macroscopically, to the second analog halftone image.

In other words, the front-side and back-side printed images are correlated at a microscopic level, i.e. they are optimized at the level of the individual printable pixels to generate the second analog halftone image in transmission. In contrast to this, WO 2015/095978 uses printed images that are, microscopically, mutually independent, without imposing a relation between the printed pictures at the level of the printable pixels.

The present method provides for a superior image quality of the transmission image. At the same time, it relies on being able to align the two printed images with an accuracy corresponding to the individual printable pixels, which renders counterfeiting harder.

Advantageously, the area where said first and said third binary halftone images B 1(x, y) and B3(x, y) are both 1 corresponds to no more than 10%, in particular no more than 1%, of a total area of overlap of the first and said front-side and said back-side printed images. In other words, the inked areas of the two printed images barely overlap. This is of particular advantage if the used ink, dye or coloring has residual transmission: in that case, any areas that are inked on both sides of the document will appear different from areas that are inked on only one side. By minimizing the areas that are inked on both sides, artefacts arising from this remain small.

In a particular embodiment, the following relation is maintained:

$$B3(x, y) = B2(x, y) \text{ AND NOT } B1(x, y). \qquad (2)$$

In other words, B3 is only inked where B2 is inked and B1 is not inked. This avoids all situations where both B1 and B3 are inked.

In yet another advantageous embodiment, the first analogue halftone image is brighter than the second analogue halftone image in the sense that

$$A2(x', y') \leq A1(x', y'), \qquad (3)$$

wherein A1(x, y) is the value of the first analog halftone image in a given image channel and A2(x, y) is the value of said second analog halftone image in the image channel at image coordinates x', y'.

In this context, the "channel" can be any component of the image, in particular the gray level or a color or luminance component as described below.

This simplifies to maintain the condition of Eq. (1) above.

In particular, the invention comprises the step of providing a first and/or a second master image. Each such master image is an analogue halftone image according to the definition below. The first and/or second analog halftone image can then be provided from the first and/or second master image by compressing the range of the first and/or second master image such that, for all image pixels x and y and for at least one image channel of the first and second analog halftone images, relation (3) is fulfilled.

Brief Description of the Drawings

The invention will be better understood and objects other than those set forth above will become apparent when consideration is given to the following detailed description thereof. This description makes reference to the annexed drawings, wherein:

Fig. 1 shows a first (A) and second (B) master image,
Fig. 2 shows a first (A) and a second (B) analog halftone image,
Fig. 3 shows a first (A) and a third (B) binary halftone image for the analog halftone images of Fig. 2,
Fig. 4 shows a second binary halftone image,
Fig. 5 shows an enlarged version of the superposition of the first and second binary halftone images corresponding to section V of Fig. 4,
Fig. 6 shows another version of a first (A) and a third (B) binary halftone image for the analog halftone images of Fig. 2,
Fig. 7 shows the corresponding second binary halftone image,
Fig. 8 shows a further embodiment of a first (A) and second (B) master image,
Fig. 9 shows a first (A) and a third (B) binary halftone image for the analog halftone images derived from the master images of Fig. 8,
Fig. 10 shows a second binary halftone image,
Fig. 11 shows a third embodiment of a first (A) and second (B) master image,
Fig. 12 shows a first (A) and a third (B) binary halftone image for the analog halftone images derived from the master images of Fig. 11,
Fig. 13 shows a corresponding second binary halftone image,
Fig. 14 shows a front side of a security document,
Fig. 15 shows the backside of the security document of Fig. 14, and
Fig. 16 is an example of a single halftoning cell.

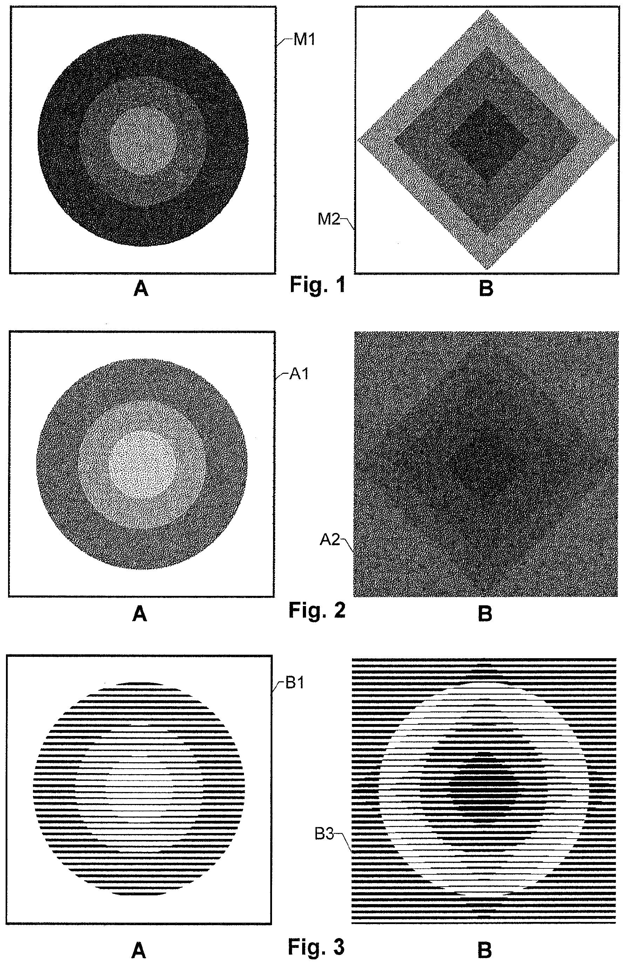

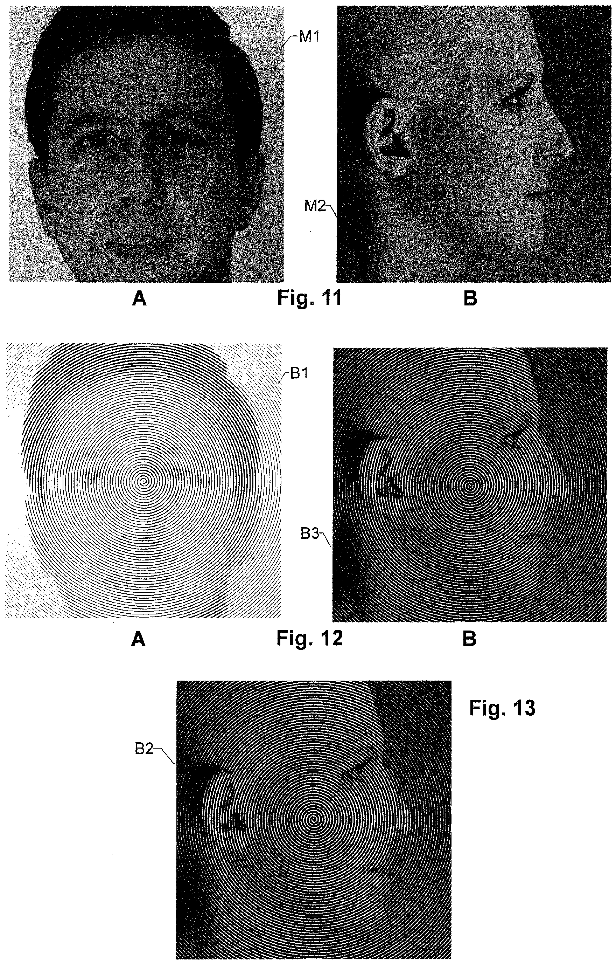

Note: Figs. 1, 2, 8, and 11 represent analog images. They are reproduced in the figures using Jarvis halftoning for making them reproducible, but in reality, they are not halftoned but analog values. In contrast to this, the other figures up to Fig. 13 show binary halftone images wherein the black parts represent the inked parts and the bright parts represent the non-inked parts.

Modes for Carrying Out the Invention

*Definitions:*

- An analog halftone image is a numerical image having a plurality of image pixels. It has, for at least one image channel, at least three different image pixels, i.e. different channel values at said image pixels. Advantageously, there are at least three image pixels having different values in said image channel. If said image channel is normalized between 0 and 1, there are advantageously at least three image pixels having values in said channel that mutually differ by at least 0.1, e.g. one image pixel having a channel value of 0.05, one pixel having a channel value of 0.15, and one image pixel having a channel value of 0.25. Analog halftone images are typically represented by multi-bit image channel values, e.g. in a JPEG or TIFF image format.

The analog halftone image may be a monochromatic image (in particular a grayscale image) or a color image.

- An image channel is a scalar numeric value describing one component of an image pixel. It can e.g. be the gray-scale value of a gray-scale image. For a color picture, it may e.g. be one of the following channels, depending on the color space used: R, G, or B for an RGB color space; Y, U, or V for the YUV color space; C, M, Y, K for the CMYK color space; H, S, or V for the HSV color space. It may also be any other channel of any other color space.

Advantageously, the image channel used in the present context is a channel whose value is coupled to the image's brightness in a monotonously increasing manner. In other words, if constant values are maintained in all (if any) other channels of the image and the value of said channel is increased, the perceived brightness of the image increases. Examples for such channels are the gray-scale value (0 for black and 1 for white) for a gray-scale color space, any of the three channels of the RGB color space, or the Y' channel of the YUV color space.
In the following, only a single image channel of the analog images and master images is discussed, and it is represented in Figs. 1, 2, 8, and 11 with black showing the darkest and lowest value and white showing the brightest and highest value.
In the following, it is assumed that the image channel is normalized from 0 to 1.

- A binary halftone image is a numerical representation of a halftone image that has two brightness levels only (e.g. black and white, or dark and bright, or transmitting/non-transmitting). The binary halftone image B is represented, for each printable pixel x, y in said image, by a binary density $B(x, y)$, with $B(x, y)$ being 1 at (inked) pixels and 0 at non-inked pixels.

A single printable pixel is advantageously smaller than 100 $\mu$m x 100 $\mu$m such that it is invisible to the unaided eye.
Adjacent printed pixels can form printing regions that advantageously have, at least in one direction, a local extension of no more than 1 mm, to render them difficult to see from larger distances.
Macroscopically, i.e. when averaged over areas of at least 10 mm$^2$, the binary halftone image exhibits at least three different brightness levels corresponding (when printing) to the average printed surface area (i.e. a percentage of printed surface in each area). Advantageously, there are at least three visually distinct macroscopic areas in the binary halftone image, i.e. areas that mutually differ from each other by e.g. at least 10% in total inked surface, such as one area having a coverage of 0.05, one area having a coverage of 0.15, and one area having a coverage of 0.25.

- "Inked", in this context, can refer to regions that carry printing ink as well as to regions carrying any other sort of dye or coloring not applied in a printing process, e.g. to regions where coloring has been applied by laser illumination of a photosensitive material.

- A transparent region in the substrate of the security document designates a region having an optical transmission, at least at one visible wavelength between 400 and 800 nm, of at least 50%. Advantageously, said transparent region is non-diffusive at said wavelength, i.e. it has a half-width scattering angle for perpendicularly incident light at said wavelength of no more than 5°.

*General implementation, first embodiment:*

The present invention may start from a first master image M1 and a second master image M2, e.g. as shown in Fig. 1.

Both master images are analog halftone images. In the following, it is assumed that each master image is a monochrome or even grayscale image, but the invention can be readily carried out for color images, too, by implementing its steps for one or more channels of these images.

The first and second master images M1, M2 are represented by the values M1(x', y') and M2(x', y') of a channel as a function of the image coordinates x', y'. M1(x', y') and M2(x', y') are defined for each image pixel.

If the invention does start from such a first and second master image M1, M2, in a next step, first and second analog halftone images A1, A2 may be calculated from the master images M1, M2.

The first and second analog halftone images A1, A2 have values A1(x', y') and A2(x', y') for each image pixel.

Alternatively to calculating the first and second analog halftone images A1, A2 from master images M1, M2, the method may start from A1 and/or A2 directly.

For best results, the ranges of the first and second halftone images don't overlap, i.e. as given in Eq. (3) above, i.e. $A2(x', y') \leq A1(x', y')$ for all image coordinates x', y'.

Advantageously, there is a single given threshold T with

$$A2(x', y') \leq T \leq A1(x', y') \qquad (4)$$

for all image pixels x', y'.

Assuming that the image channel is normalized (i.e. has values between 0 and 1), T is advantageously 0.5.

In one embodiment, the analog halftone images A1, A2 can be calculated from

$$A1(x', y') = (1 - T) * M1(x', y') + T \qquad (5)$$

$$A2(x', y') = T * M2(x', y') \qquad (6)$$

From the analog halftone images A1 and A2, a first binary halftone image B1 and a second binary halftone image B2 may be calculated.

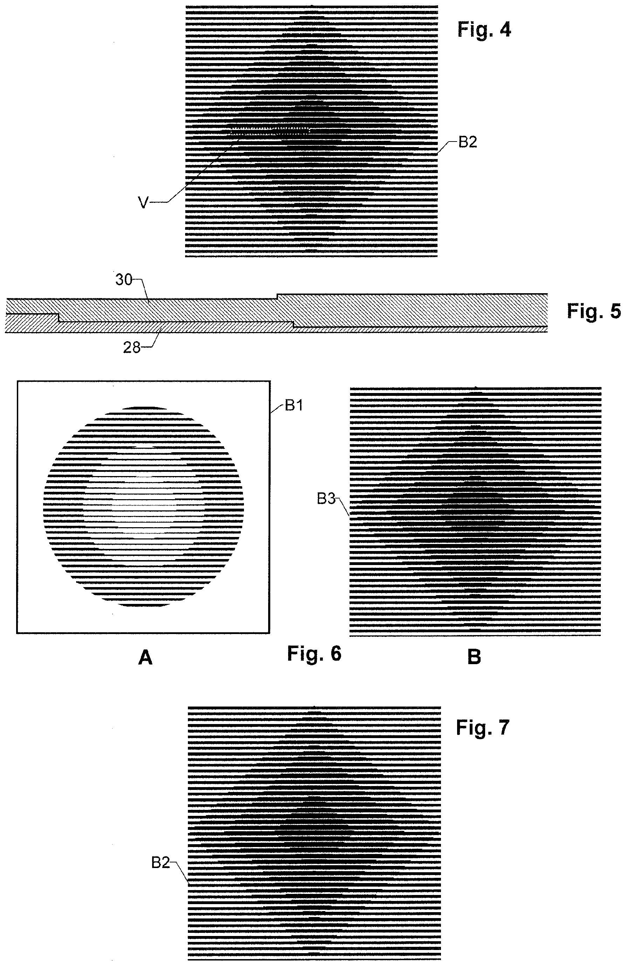

An example of B1 is shown in Fig. 3A and of B2 in Fig. 4.

The first and second binary halftone images B1 and B2 represent the first and second analog halftone images in the sense that, when viewed as printed versions from a sufficient distance, the average brightness of B1 substantially corresponds to the brightness of A1 and the average brightness of B2 substantially corresponds to the brightness of A2 (at least for the image channel considered herein).

B1 and B2 can be calculated from A1, A2 using known digital halftoning algorithms. Details regarding such algorithms are described below.

In the example of Figs. 3 and 4, the algorithm involves converting the analog halftone image in a series of regularly spaced, parallel, dark lines the thickness of which varies with the average brightness of the analog halftone image in the given image channel.

Once that B 1 and B2 are known, a third binary halftone image B3 is calculated. B3 is such that condition (1) above is fulfilled, i.e. B1(x, y) OR B3(x, y) = B2(x, y).

In the embodiment of Figs. 3 and 4, B3(x, y) is calculated from B1(x, y) using Eq. (2) above, i.e. B3(x, y) = B2(x, y) AND NOT B1(x, y).

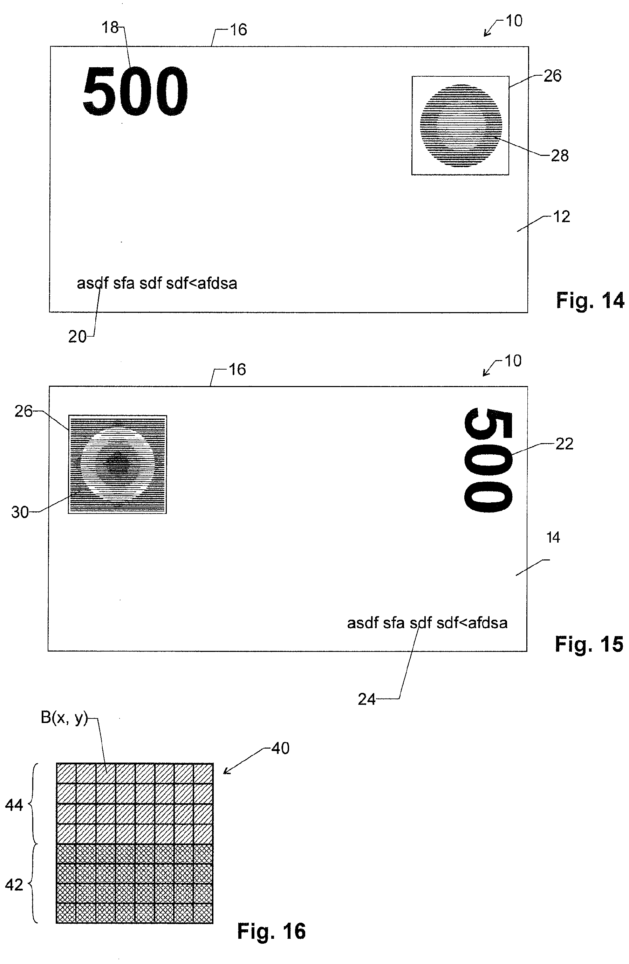

In a final step, the security document 10 is manufactured as illustrated in Figs. 14, 15, with Fig. 14 showing the document's front side 12 and Fig. 15 showing its backside 14.

Document 10 comprises a substrate 16, which may carry various markings, such as writing and/or symbols 18 - 24. At least one region 26 of substrate 16 is transparent. It can e.g. be formed by a polymer foil.

A front-side printed image 28 is printed on the document's front side 12 on transparent region 26, and a back-side printed image 30 is printed on the document's backside 14.

Front-side printed image 28 is printed according to first binary halftone image B1(x, y), i.e. it is dark where B1(x, y) is 1 and bright where B1(x, y) is 0.

Back-side printed image 30 is printed according to third binary halftone image B3(x, y), i.e. it is dark where B3(x, y) is 1 and bright where B3(x, y) is 0.

x and y denote the printing coordinates, which typically are obtained from the image coordinates x', y' by an affine transformation, in particular a rotating and/or scaling transformation.

For example, the printed images 28, 30 can be formed by applying ink wherever the value of the respective binary halftone image B1, B2 is 1 and no ink elsewhere.

The two printed images 28, 30 are in register, such that their coordinates x, y coincide, advantageously within the accuracy of a single printable pixel.

When document 10 is viewed from front side 12 in reflection, front-side printed image 28 is the dominant feature in transparent region 26, i.e. the viewer will basically see an image corresponding to first analog halftone image A1.

When document 10 is viewed in transmission, with a light source on one side and the viewer on the other side, the structure seen in transparent region 26 will correspond to the one shown in Fig. 4, i.e. B2. Hence, the viewer will basically see an image corresponding to second analog halftone image A2.

Fig. 5 shows a single line of the superposition of the two printed halftone images 28, 30. In this embodiment, the inked parts of the two images 28, 30 do not overlap because Eq. (2) has been used for calculating B3(x, y).

*Second embodiment:*

Figs. 6 and 7 show the first through third halftone images B1 - B3 of a second embodiment. It differs from the first embodiment in that B3 has been calculated as

$$B3(x, y) = B2(x, y). \qquad (7)$$

In other words, B3 and B2 are identical. In this embodiment, viewing the document in reflection from its front side 12 shows the first analog halftone image A1 and viewing it in transmission shows the second analog halftone image A2. However, viewing the document in reflection from backside 14 also shows the second halftone image A2.

In contrast to the first example, in this example, the inked parts of the front side and back side printed images 28, 30 overlap.

*Third embodiment:*

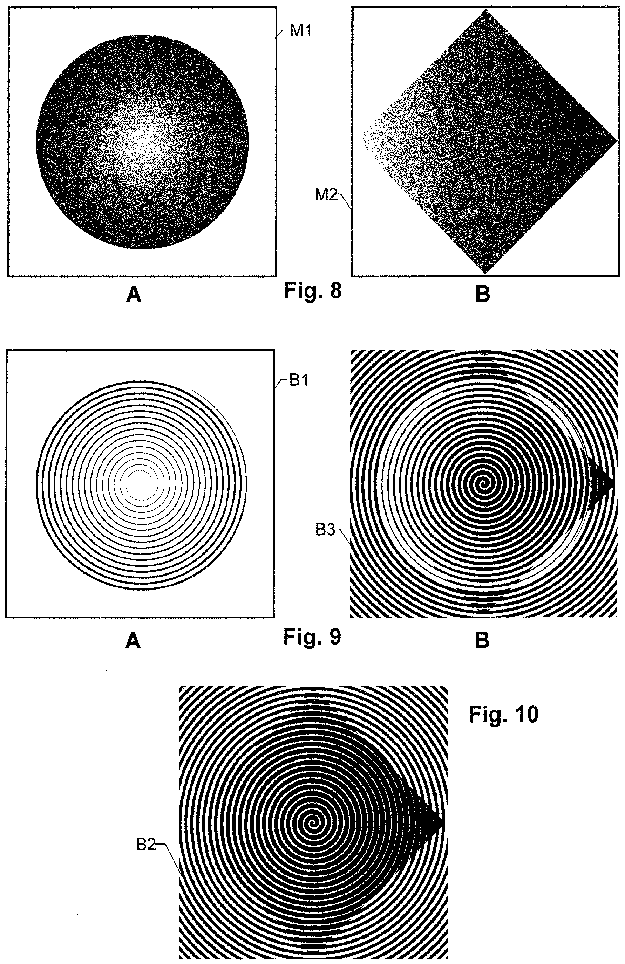

Figs. 8 - 10 show a third embodiment. It starts out from different master images M1, M2 as shown in Fig. 8 under A and B.

In a next step, the first and second analog halftone images A1, A2 are calculated in the same way as in the first embodiment. They are not shown in the figures.

Then, the first and second binary halftone images B1 and B2 are calculated as shown in Fig. 9A and 10. The digital halftoning algorithms used here are different from the ones of the first embodiment. They convert the analog halftone images into a spiral the thickness of which varies with the average brightness of the analog halftone image in the given image channel.

Next, the third binary halftone image B3 is calculated using Eq. (2) above, as shown in Fig. 9B.

*Fourth embodiment:*

The Fourth embodiment shown in Figs. 11 - 13 corresponds to the third one, but it uses portraits for the master images M1 and M2 and Eq. (7) for calculating the third binary halftone image B3.

This example illustrates that the invention can be applied to a person' s photograph.

This is particularly advantageous if the document is an identification document. In this case, the first analog halftone image A1 and/or the first master image M1 can be a photograph of the document's bearer (i.e. of the person identified by the document). In this case, the security feature described here is personalized for enhanced security.

*Digital halftoning algorithms:*

As mentioned, a first digital halftoning algorithm is used for calculating the first binary halftone image, and a second digital halftoning algorithm is used for calculating the second binary halftone image.

The two digital halftoning algorithms are advantageously the same, but they may also differ.

Numerous halftoning algorithms generating a binary halftone image B(x, y) from an analog halftone image A(x', y') group the printable pixels (indexed by integer coordinates x, y) into cells. Each cell contains a plurality of adjacent, printable pixels. For each cell, the algorithm retrieves at least one image value A(x', y') at the image location x', y' corresponding e.g. to the cell's center. Depending on the value A(x', y'), it calculates the number n of printable pixels to be dark in said cell. If, for example, A(x', y') is 1 (fully bright), the number of dark printable pixels is 0. If A(x', y') is 0.5 (mid-level brightness), 50% of the printable pixels must be dark. If A(x', y') is 0 (fully dark), 100% of the printable pixels in the cell must be dark.

For optimum results, the algorithms for calculating B 1 and B2 from A1 and A2 use cells that are in mutual register, i.e. the cells used for calculating B 1 coincide with the cells for B2. And the positions of their printable pixels should coincide, too.

In the following, some advantageous properties of the digital halftoning algorithms are discussed.

Many halftoning algorithms rely on regular grids, such as e.g. dithering algorithms. Other halftoning algorithms can be gridless. See e.g. Y. Pnueli and A. M. Bruckstein, Graphical Models and Imaging Processing, Vol. 28(1), pp. 33 - 64, 1996, Academic Press.

For optimum results, the printable pixels (denoted by integer coordinates x, y) of B1(x, y) and B3(x, y) should coincide, i.e. where the front-side and back-side printed images overlap on the security document, there should be one printable pixel of B1 at the location of each printable pixel of B3 and vice versa.

Hence, there should also be (in the region of overlap of the printed images) one printable pixel of B1(x, y) for each printable pixel of B2, and vice versa.

Further, the digital halftoning algorithms for calculating B 1 and B2 are advantageously such that, if a printable pixel x, y might, depending on the values of A1, be set to 1 (inked) in B 1, said printable pixel x, y is always 1 in B2, thereby making sure that the transmission value B1(x, y) OR B3(x, y) = B1(x, y) OR B2(x, y) is independent of the value of B1(x, y).

This is illustrated in Fig. 16, which shows, as an example, a halftone cell 40 having 64 printable pixels B(x, y) arranged in a square.

A first part (e.g. half) of the printable pixels are reserved for representing the first analog halftone image A1(x', y'), i.e. they might be set to 0 or 1 by the first binary halftoning algorithm depending on the values of the first analog halftone image A1(x', y'). These pixels 42, which are shown in a cross-hatch pattern in Fig. 16, are always 1 in the second binary halftone image B2(x, y).

A second part (e.g. half) of the printable pixels of cell 40 are reserved for representing the second analog halftone image A2(x', y'), i.e. they might be set to 0 or 1 by the second binary halftoning algorithm depending on the values of the second analog halftone image A2(x', y'). These pixels 44, which are shown in a hatch of parallel lines, are always 0 in the first binary image B1(x, y).

*Notes:*

The security document for use with the present invention may e.g. a banknote, an identification document (such as a passport, ID, or access card), a voucher, or a certificate that should be hard to counterfeit.

In the embodiments above, the compression of the range of the master images M1, M2 to the first and second analog halftone images A1, A2 and the subsequent calculation of the binary halftone images B 1, B2 are separate steps. However, the compression step may also be an inherent property of the binary halftoning algorithms. For example, a first halftoning algorithm may render a brightness level of the first master image M1 into the pixels 42 of Fig. 16 while setting the pixels 44 to zero, thereby calculating the first binary halftone image B 1 for said cell. A second halftoning algorithm may render a brightness level of the second master image M2 into the pixels 44 of Fig. 16 while setting the pixels 42 to 1, thereby calculating the second binary halftone image B2 for said cell. In this situation, the master images M1 and M2 may be considered to correspond to the first and second analog halftone images A1, A2 of the claims.

Similarly, in the above examples, the second binary halftone image B2(x, y) was calculated explicitly. However, it may also only be calculated implicitly while calculating the third binary halftone image B3(x, y). In other words, what matters is that a second binary halftone image B2(x, y) fulfilling Eq. (1) exists. It does not need to be calculated explicitly in the method.

While there are shown and described presently preferred embodiments of the invention, it is to be distinctly understood that the invention is not limited thereto but may be otherwise variously embodied and practiced within the scope of the following claims.

**Claims**

1. A method for manufacturing a security document by printing halftone images on opposite sides (12, 14) of a transparent region (26) of a substrate comprising the steps of

    providing a first and a second analog halftone image (A1, A2),

calculating, using a first digital halftoning algorithm, a first binary halftone image B1(x, y) representing said first analog halftone image (A1),

calculating, using a second digital halftoning algorithm, a second binary halftone image B2(x, y) representing said second analog halftone image (A2),

wherein if a printable pixel x, y is set to 1 in B1, said printable pixel x, y is always set to 1 in B2,

calculating a third binary halftone image B3(x, y), such that B1, B2, and B3 fulfil the binary condition

$$B1(x, y) \text{ OR } B3(x, y) = B2(x, y)$$

applying a front-side printed image (28) according to said first binary halftone image B1(x, y) on a front side (12) of said transparent region (26), and

applying a back-side printed image (30) according to said third binary halftone image B3(x, y) on a backside (14) of said transparent region (26), wherein said back-side printed image (30) is in register with said front-side printed image (28).

2. The method of claim 1 wherein an area where said first and said third binary halftone images B1(x, y) and B3(x, y) are both 1 corresponds to no more than 10%, in particular no more than 1%, of a total area of overlap of said front-side and said back-side printed images (28, 30).

3. The method of any of the preceding claims wherein

$$B3(x, y) = B2(x, y) \text{ AND NOT } B1(x, y).$$

4. The method claim 1 wherein

$$B3(x, y) = B2(x, y).$$

5. The method of any of the preceding claims wherein

$$A2(x', y') \leq A1(x', y'),$$

wherein A1(x', y') is a value of said first analog halftone image (A1) in a given image channel and A2(x', y') is a value of said second analog halftone image (A2) in said image channel at image coordinates x', y'.

6. The method of claim 5 comprising the steps of

providing a first and/or a second master image (M1, M2) and

providing said first and/or second analog halftone image (A1, A2) by compressing a range of said first and/or second master image (M1, M2) such that, for all image pixels x' and y' and for at least one image channel of said first and second analog images,

$$A2(x', y') \leq A1(x', y').$$

7. The method of any of the preceding claims wherein said first and second digital halftoning algorithms are such that, if a printable pixel (x, y) of said first binary halftone image B1(x, y) might, depending in the values of said first analog halftone image A1(x', y'), be set to 1 by the first digital halftoning algorithm, a printable pixel (x, y) of said second binary halftone image B2(x, y) is always 1.

8. The method of any of the preceding claims wherein said first and said second digital halftoning algorithms are the same.

9. The method of any of the preceding claims wherein said document is an identification document said first analog halftone image (A1) is a photograph of the document's bearer.

**10.** A security document manufactured or manufacturable by the method of any of the preceding claims.

**Patentansprüche**

**1.** Verfahren zur Herstellung eines Sicherheitsdokuments durch Drucken von Halbtonbildern auf gegenüberliegende Seiten (12, 14) eines transparenten Bereichs (26) eines Substrats, umfassend die Schritte

Bereitstellen eines ersten und eines zweiten analogen Halbtonbilds (A1, A2),
Berechnen eines ersten binären Halbtonbildes B1(x, y), das das erste analoge Halbtonbild (A1) darstellt, unter Verwendung eines ersten digitalen Halbtonalgorithmus,
Berechnen eines zweiten binären Halbtonbildes B2(x, y), das das zweite analoge Halbtonbild (A2) darstellt, unter Verwendung eines zweiten digitalen Halbtonalgorithmus, wobei, wenn ein druckbares Pixel x, y in B1 auf 1 gesetzt ist, das druckbare Pixel x, y in B2 immer auf 1 gesetzt ist,
Berechnen eines dritten binären Halbtonbildes B3(x, y), so dass B1, B2 und B3 die binäre Bedingung

$$B1(x, y) \text{ ODER } B3(x, y) = B2(x, y)$$

erfüllen,
Aufbringen eines vorderseitigen Druckbildes (28) entsprechend dem ersten binären Halbtonbild B1(x, y) auf einer Vorderseite (12) des transparenten Bereichs (26), und
Aufbringen eines rückseitigen Druckbildes (30) gemäss dem dritten binären Halbtonbild B3(x, y) auf einer Rückseite (14) des transparenten Bereichs (26), wobei das rückseitige Druckbild (30) mit dem vorderseitigen Druckbild (28) ausgerichtet ist.

**2.** Verfahren nach Anspruch 1, wobei ein Bereich, in dem das erste und das dritte binäre Halbtonbild B1(x, y) und B3(x, y) beide 1 sind, nicht mehr als 10%, insbesondere nicht mehr als 1%, einer Gesamtüberlappungsfläche der gedruckten Vorder- und Rückseitenbilder (28, 30) entspricht.

**3.** Das Verfahren nach einem der vorangegangenen Ansprüche, wobei

$$B3(x, y) = B2(x, y) \text{ UND NICHT } B1(x, y).$$

**4.** Das Verfahren nach Anspruch 1, wobei

$$B3(x, y) = B2(x, y).$$

**5.** Das Verfahren nach einem der vorangegangenen Ansprüche, wobei

$$A2(x', y') \leq A1(x', y'),$$

wobei A1(x', y') ein Wert des ersten analogen Halbtonbildes (A1) in einem gegebenen Bildkanal ist und A2(x', y') ein Wert des zweiten analogen Halbtonbildes (A2) in dem Bildkanal bei den Bildkoordinaten x', y' ist.

**6.** Das Verfahren nach Anspruch 5 umfassend die folgenden Schritte

Bereitstellen eines ersten und/oder eines zweiten Masterbildes (M1, M2) und
Bereitstellen des ersten und/oder zweiten analogen Halbtonbildes (A1, A2) durch Komprimieren eines Bereichs des ersten und/oder zweiten Masterbildes (M1, M2), so dass für alle Bildpixel x' und y' und für mindestens einen Bildkanal des ersten und zweiten analogen Bildes,

$$A2(x', y') \leq A1(x', y').$$

7. Verfahren nach einem der vorhergehenden Ansprüche, wobei der erste und der zweite digitale Halbtonalgorithmus so beschaffen sind, dass, wenn ein druckbares Pixel (x, y) des ersten binären Halbtonbildes B1(x, y) in Abhängigkeit von den Werten des ersten analogen Halbtonbildes A1(x', y') durch den ersten digitalen Halbtonalgorithmus auf 1 gesetzt werden könnte, ein druckbares Pixel (x, y) des zweiten binären Halbtonbildes B2(x, y) immer 1 ist.

8. Das Verfahren nach einem der vorhergehenden Ansprüche, wobei der erste und der zweite digitale Halbtonbildungsalgorithmus derselbe sind.

9. Verfahren nach einem der vorhergehenden Ansprüche, wobei das Dokument ein Identifikationsdokument ist und das erste analoge Halbtonbild (A1) eine Fotografie des Inhabers des Dokuments ist.

10. Sicherheitsdokument, hergestellt oder herstellbar nach dem Verfahren eines der vorhergehenden Ansprüche.

**Revendications**

1. Un procédé de fabrication d'un document de sécurité par impression d'images en demi-teintes sur les faces opposées (12, 14) d'une région transparente (26) d'un substrat, comprenant les étapes de

fournir une première et une deuxième image analogique en demi-teinte (A1, A2),
calculer, à l'aide d'un premier algorithme de tramage numérique, une première image binaire en demi-teinte B1(x,y) représentant ladite première image analogique en demi-teinte (A1),
calculer, à l'aide d'un deuxième algorithme de tramage numérique, une deuxième image binaire en demi-teintes B2(x,y) représentant ladite deuxième image analogique en demi-teintes (A2),
dans lequel, si un pixel imprimable x, y est mis à 1 dans B1, ledit pixel imprimable x, y est toujours mis à 1 dans B2,
calculer une troisième image binaire en demi-teintes B3(x,y), telle que B1, B2 et B3 remplissent la condition binaire

$$B1(x,y) \ \text{OU} \ B3(x,y) \ = \ B2(x,y)$$

appliquer une image imprimée au recto (28) selon ladite première image binaire en demi-teintes B1(x,y) sur un recto (12) de ladite région transparente (26), et
appliquer une image imprimée au verso (30) selon ladite troisième image binaire en demi-teintes B3(x,y) sur un verso (14) de ladite région transparente (26), ladite image imprimée au verso (30) étant en registre avec ladite image imprimée au recto (28).

2. Le procédé selon la revendication 1, dans lequel une zone où ladite première et ladite troisième image binaire en demi-teintes B1(x,y) et B3(x,y) valent toutes deux 1 ne correspond pas à plus de 10%, en particulier pas à plus de 1%, d'une zone totale de chevauchement desdites images imprimées sur la face avant et sur la face arrière (28, 30).

3. Le procédé selon l'une des revendications précédentes dans lequel

$$B3(x,y) \ = \ B2(x,y) \ \text{ET PAS} \ B1(x,y).$$

4. Le procédé selon la revendication 1, dans lequel B3(x,y) = B2(x,y).

5. Le procédé selon l'une des revendications précédentes, dans lequel

$$A2(x',y') \ \le \ A1(x',y'),$$

où A1(x',y') est une valeur de ladite première image analogique en demi-teintes (A1) dans un canal d'image donné et A2(x',y') est une valeur de ladite deuxième image analogique en demi-teintes (A2) dans ledit canal d'image aux coordonnées d'image x', y'.

6. Le procédé selon la revendication 5, comprenant les étapes de

fournir une première et/ou une deuxième image maîtresse (M1, M2) et

fournir ladite première et/ou deuxième image analogique en demi-teinte (A1, A2) en comprimant une plage de ladite première et/ou deuxième image maîtresse (M1, M2) de telle sorte que, pour tous les pixels d'image x' et y' et pour au moins un canal d'image desdites première et deuxième images analogiques,

$$A2(x',y') \leq A1(x',y').$$

7. Le procédé selon l'une des revendications précédentes, dans lequel lesdits premier et deuxième algorithmes de tramage numérique sont tels que, si un pixel imprimable (x,y) de ladite première image binaire en demi-teinte B1(x, y) peut, en fonction des valeurs de ladite première image analogique en demi-teinte A1(x',y'), être mis à 1 par le premier algorithme de tramage numérique, un pixel imprimable (x,y) de ladite deuxième image binaire en demi-teinte B2(x,y) est toujours 1.

8. Le procédé selon l'une des revendications précédentes, dans lequel le premier et le deuxième algorithme de tramage numérique sont identiques.

9. Le procédé selon l'une des revendications précédentes, dans lequel ledit document est un document d'identification et ladite première image analogique en demi-teinte (A1) est une photographie du porteur du document.

10. Un document de sécurité fabriqué ou pouvant être fabriqué par le procédé selon l'une des revendications précédentes.

**A**                **Fig. 1**                **B**

~M1

M2~

**A**                **Fig. 2**                **B**

~A1

A2~

**A**                **Fig. 3**                **B**

~B1

B3~

Fig. 4

B2

V

Fig. 5

30

28

B1

A

Fig. 6

B3

B

Fig. 7

B2

Fig. 8

A     B

Fig. 9

A     B

Fig. 10

Fig. 11

A       B

Fig. 12

A       B

Fig. 13

500

18

16

26

28

12

asdf sfa sdf sdf<afdsa

20

**Fig. 14**

10

16

10

26

30

500

22

14

asdf sfa sdf sdf<afdsa

24

**Fig. 15**

B(x, y)

40

44

42

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015095978 A

- US 20160321852 A

**Non-patent literature cited in the description**

- **Y. PNUELI ; A. M. BRUCKSTEIN.** Graphical Models and Imaging Processing. Academic Press, 1996, vol. 28, 33-64